# EUROPEAN PATENT APPLICATION

(11) **EP 3 067 638 A1**
(43) Date of publication of application: **14.09.2016**
(21) Application number: 16159514.5
(22) Date of filing: 09.03.2016
(51) Int. Cl.: F24H 3/04, F24D 13/04, F24D 19/00

(54) **TOWEL HEATER OF THE HYDRAULIC OR ELECTRO-HYDRAULIC TYPE WITH DIFFERENTIATED HEATING AREAS**

(30) Priority: 10.03.2015 IT MI20150367
(71) Applicant: Deltacalor S.r.L., 23801 Calolziocorte (Lecco) (IT)
(72) Inventor: PASTORINO, Giovanni, 23900 LECCO (LC) (IT)
(74) Representative: Cosenza, Simona

(57) **Abstract**

Towel heater (10) of the hydraulic or electro-hydraulic type with differentiated heating areas, comprising a hydraulic circuit for circulation of a thermovector liquid, said circuit comprising at least one first radiator section (11) and at least one second convector section (12) in which said thermovector liquid circulates, wherein the hydraulic circuit comprises an inlet manifold (21), which is provided with an inlet (14) associable with a supply source of the hot thermovector liquid, and an outlet manifold (22), which is provided with an outlet (15) associable with a discharge of the cold thermovector liquid, wherein the inlet manifold (21) and the outlet manifold (22) consist of a respective column element, a plurality of heating bodies (16) forming the first radiator section (11) and that extend horizontally between the inlet manifold (21) and the outlet manifold (22), wherein the heating bodies (16) act as element on which to hang towels, and a battery of finned tubes (17) forming the second convector section (12), the finned tubes (17) extending between the inlet manifold (21) and the outlet manifold (22) and the battery of finned tubes (17) being in communication in inlet with the inlet manifold (21) and in outlet with the outlet manifold (22).

## Description

The present invention refers to a towel heater of the hydraulic or electro-hydraulic type with differentiated heating areas.

More in particular, the present invention refers to a towel heater for residential use.

In the field of residential heating, there are known heating apparatuses with differentiated heating areas that comprise a radiator of the hydraulic, electric or mixed (electro-hydraulic) type and a ventilated electric thermoconvector, i.e. a convector heater with electrical resistances and with forced circulation. Heating apparatuses of this type are known, for example, from the Italian patent for utility model no. 243.828 or from French patent no. 2.923.895.

Heating apparatuses of this type are used, in general, for heating rooms like, for example, bathroom or similar, and the radiator, in general, is shaped like a towel heater.

The convector heater with which these known heating apparatuses are equipped allows the room temperature to be advantageously and quickly increased when the radiator is switched off or even while it is switched on.

These heating apparatuses of the known type, however, involve substantial additional energy consumption due, in particular, to the use in convector heaters of electrical resistances of power not less than 1kW and that, in certain cases, requires oversizing of the electrical supply system, in particular if such electrical resistances are added to those present locally to heat the water that supplies the radiator.

A further drawback of the heating apparatuses of known types consists of the fact that they do not allow the direction of the air flow coming out from the convector heater to be adjusted. In general, indeed, even if oscillating fins are provided, the air flow coming out from the convector heater has a substantially horizontal direction. The hot air produced by the convector heater is thus diffused into the room to be heated, but it is not possible to direct it in a substantially vertical direction, upwards or downwards, so as to be able to exploit the heat thereof to dry or heat the towels hung on the radiator.

The purpose of the present invention is to avoid the drawbacks of the prior art.

In this general purpose, a particular purpose of the present invention is to propose a towel heater of the hydraulic or electro-hydraulic type with differentiated heating areas that allows the room temperature to be advantageously and quickly heated with low consumption of electrical energy.

A further purpose of the present invention is to propose a towel heater of the hydraulic or electro-hydraulic type with differentiated heating areas that allows towels or similar hung on it to be dried or heated quickly and conveniently.

Yet another purpose of the present invention is to make a towel heater of the hydraulic or electro-hydraulic type with differentiated heating areas that is structurally and constructively simple and of low bulk with low costs.

These purposes according to the present invention are accomplished by making a towel heater of the hydraulic or electro-hydraulic type with differentiated heating areas as outlined in claim 1.

Further characteristics are provided in the dependent claims.

The characteristics and advantages of a towel heater of the hydraulic or electro-hydraulic type with differentiated heating areas according to the present invention will become clearer from the following description, given as an example and not for limiting purposes, referring to the attached schematic drawings, in which:
figure 1 is a front and axonometric schematic view of a first possible embodiment of a towel heater according to the present invention;
figure 2 is a front partial section schematic view of the towel heater of figure 1;
figure 3 is a schematic plan view from above of the towel heater of figure 2;
figures 4 and 5 are views like those of figures 2 and 3 of a possible variant of the first embodiment of the towel heater according to the present invention;
figure 6 is a schematic front and axonometric view of a second possible embodiment of a towel heater according to the present invention;
figure 7 is a schematic front and partial section view of the towel heater of figure 6;
figure 8 is a schematic plan view from above of the towel heater of figure 7;
figures 9 and 10 are views like those of figures 7 and 8 of a possible variant of the second embodiment of the towel heater according to the present invention;
figures 11 and 12 are schematic front views of a possible alternative embodiment of a detail of a towel heater according to the present invention in two different positions;
figures 13 and 14 are section views according to the plane A-A of figure 11 and according to the plane B-B of figure 12, respectively.

With reference to the attached figures, a towel heater of the hydraulic or electro-hydraulic type with differentiated heating areas according to the present invention is shown, wholly indicated with reference numeral 10.

The towel heater 10 comprises a hydraulic circuit for circulation of a thermovector liquid, said circuit comprising at least one first radiator section 11 and at least one second convector section 12 that are supplied by the same thermovector liquid and the second of which has a greater heat exchange efficiency than the first. The towel heater 10 also comprises control valve means 13 for regulating the flow/flow rate of the thermovector liquid that passes through the first radiator section 11 and the second convector section 12.

The term thermovector liquid indicates, in particular, hot water at an inlet temperature generally comprised between 40°C and 85°C.

The circulation circuit comprises an inlet 14 of the hot thermovector liquid and an outlet 15 of the cold thermovector liquid, i.e. at a lower temperature than that of the hot thermovector liquid supplied in inlet.

The inlet 14 is associable with a supply source of the hot thermovector liquid (i.e. at a temperature comprised between 40°C and 85°C); the outlet 15 is associable with a discharge of the cold thermovector liquid.

The term first radiator section 11 indicates a set of heating bodies 16 in which the thermovector liquid flows and in which the exchange of energy by irradiation, although not normally predominant with respect to that by convection, is not negligible.

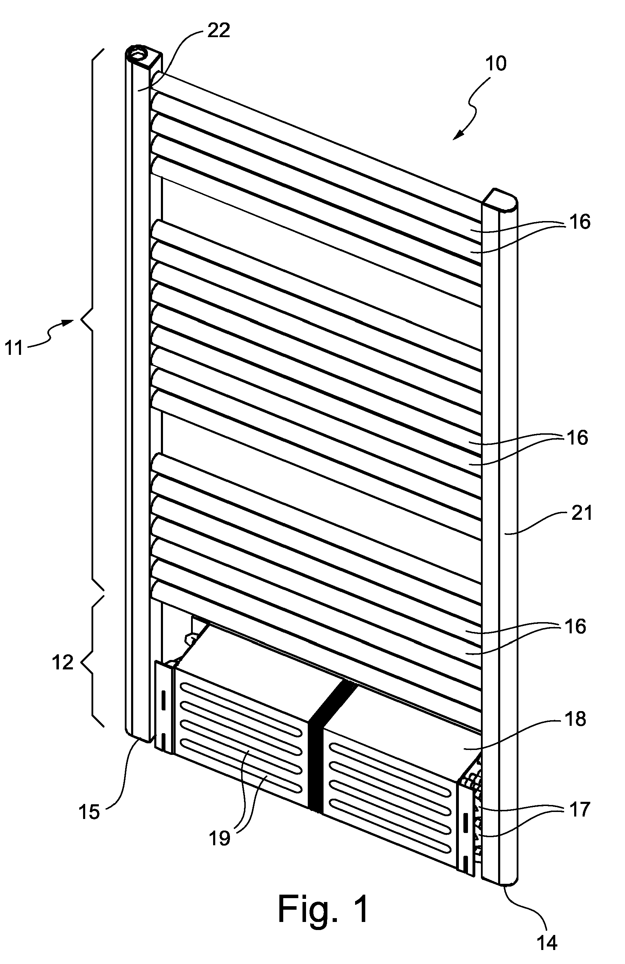

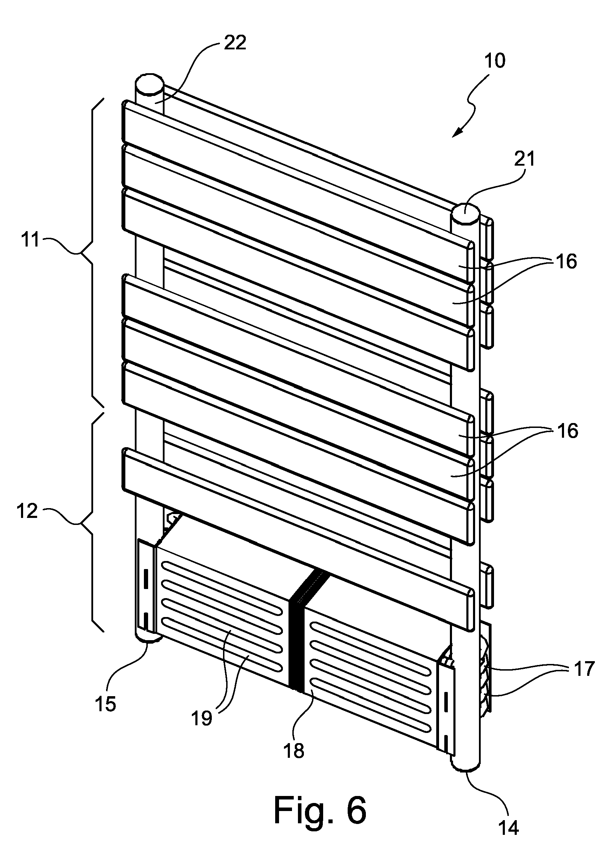

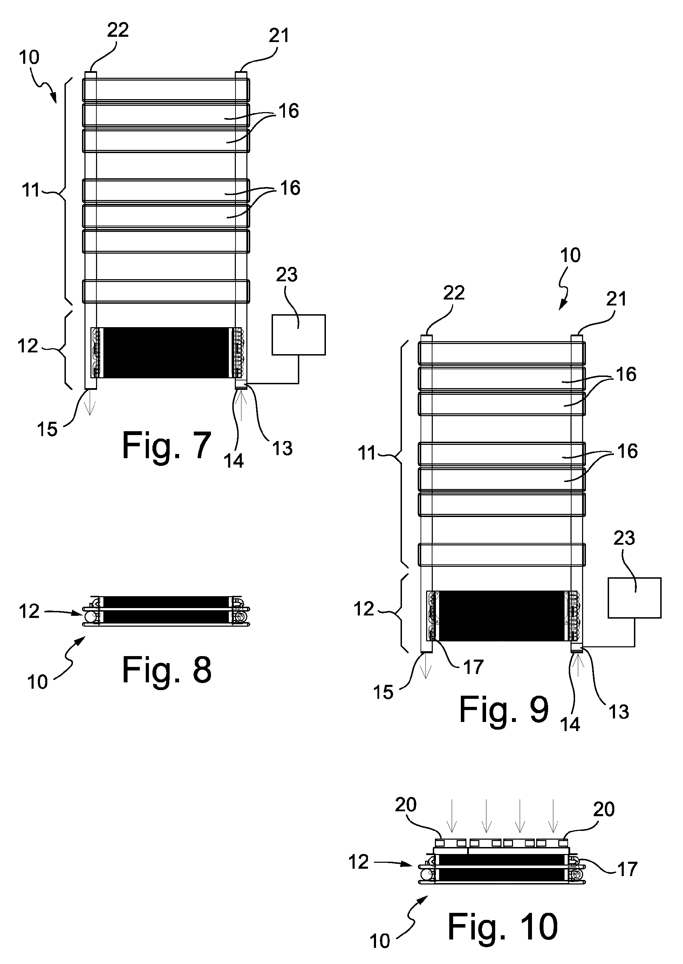

The term second convector section 12 indicates a battery of finned tubes 17 in which the thermovector liquid flows. The battery of finned tubes 17 is generally housed in a casing 18 provided with one or more inlet openings for inletting the air to be heated and with one or more outlet openings 19 for outletting the heated air. In the attached figures 1 to 10, the air inlet openings are not shown; however, as can easily be understood by the person skilled in the art, they can be of various shapes and sizes and are generally obtained in the rear wall of the casing 18. The outlet openings 19 are obtained in the front wall of the casing 18 and can be of various shapes and sizes even different from those shown in the attached figures.

The second convector section 12 can be of the natural convection or the forced convection type by means of one or more electric fans 20 housed in the casing 18.

The control valve means 13 are adapted, in particular, for selectively excluding the first radiator section 11 or the second convector section 12 from the circulation of the thermovector liquid, as well as, as known, for regulating the flow rate of the thermovector fluid simultaneously supplied in inlet to the first radiator section 11 and to the second convector section 12 that, as will become clearer hereinafter, generally operate simultaneously and in parallel with each other crossed by the same thermovector liquid.

In greater detail and with particular reference to the attached figures, the hydraulic circuit for circulation of the thermovector liquid (i.e. water) comprises an inlet manifold 21, which is provided with the inlet 14, and an outlet manifold 22, which is provided with the outlet 15. The inlet manifold 21 and the outlet manifold 22 consist of two column elements that, in use, are arranged vertically.

The first radiator section 11 comprises a plurality of heating bodies 16 that are arranged between the inlet manifold 21 and the outlet manifold 22. The heating bodies 16 extend horizontally between the inlet manifold 21 and the outlet manifold 22 and can have various shapes even different from those shown. For example, in a possible embodiment not shown in the attached figures, the first radiator section 11 can comprise a portion, also equipped with heating bodies 16, which is mounted between the inlet manifold 21 and the outlet manifold 22 in a rotatable manner between a position in which it is substantially coplanar with the remaining portion and a position in which it is rotated outwards to form a drying rack.

As known from the attached figures, the heating bodies 16 are sized and positioned so as to form elements to hang towels or similar thereupon.

The second convector section 12 comprises a battery of finned tubes 17 or "finned pack" that extend between the inlet manifold 21 and the outlet manifold 22. The battery of finned tubes 17 communicates in inlet with the inlet manifold 21 and in outlet with the outlet manifold 22.

As will be clear to the person skilled in the art, the cross section of the finned tubes 17 is smaller than the cross section of the heating bodies 16.

In a preferred embodiment, the second convector section 12 is of the type with forced circulation by means of one or more electric fans 20 housed in the casing 18 in front of the inlet openings of the air to be heated and at the rear of the battery of finned tubes 17.

The control valve means 13 can, for example, be arranged at the inlet manifold 21. The control valve means 13 can consist of a three-way valve: one inlet and two outlets that can be alternatively and selectively open to supply the thermovector liquid in inlet to the first radiator section 11 or to the second convector section 12. The control valve means 13 can consist of an on-off valve arranged along the inlet manifold 21 between the first radiator section 11 and the second convector section 12 to vary the flow rate of the fluid in inlet to the first radiator section 11 and to the second convector section 12 supplied simultaneously in parallel.

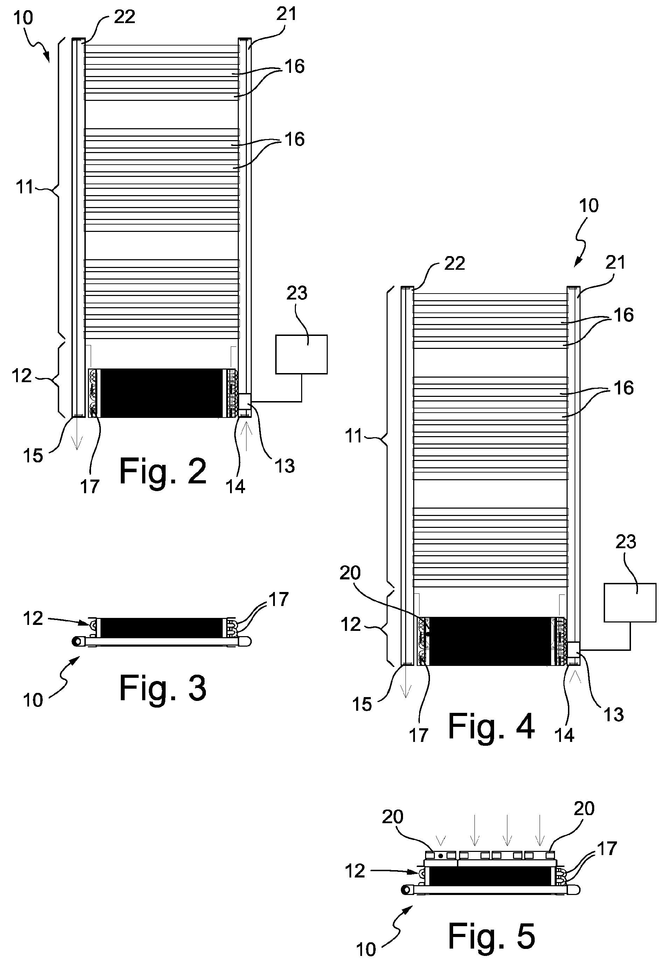

Advantageously, the control valve means 13 are of the electrically controlled type and are slaved to a control device 23 only schematically illustrated in the attached figures 2, 4, 7 and 9.

The possibility of making the apparatus 10 even without the control valve means 13 is not excluded; in this case, the vector liquid (i.e. water) always circulates both in the first radiator section 11 or thermosiphon and in the second convector section 12 connected together in parallel to the inlet manifold and to the outlet manifold.

From the attached figures, indeed, it is clear that the heating bodies 16 and the battery of finned tubes 17 are connected in inlet to the common inlet manifold 21 and in outlet to the common outlet manifold, thus generally operating in parallel to each other.

In any case, the first radiator section 11 and the second convector section 12, therefore, are both of the hydraulic type or, as described hereinafter, of the electro-hydraulic type and are inserted in one same hydraulic circuit, in which the control valve means 13, if present, regulate the flow of the thermovector liquid (i.e. water) between the first radiator section 11 and the second convector section 12, as a function of the heating requirements.

In a possible embodiment, the towel heater 10 according to the present invention is of the electric-hydraulic type comprising electric resistance elements.

These electric resistance elements, which are not shown since they are of the type known to the person skilled in the art, are generally arranged along the hydraulic circuit of the apparatus 10 to heat the thermovector liquid supplied in inlet to the first radiator section 11 and/or to the second convector section 12. Advantageously, these electric resistance elements are arranged at the inlet manifold 21 or at the second convector section 12. This, in particular, in order to increase the temperature of the thermovector liquid if it is supplied in inlet to the apparatus 10 at a temperature not greater than 50°C, so as to be able to increase and accelerate the heating of the air obtainable in particular with the second convector section 12.

In a possible alternative embodiment, the electric resistance elements are outside the hydraulic circuit and arranged at the second convector section 12 at or close to the electric fans 20 or in front of the battery of finned tubes 17 for the sole purpose of increasing the temperature of the ambient air more quickly and as needed.

These electric resistance elements, if present, are also slaved to the control device 23.

Figures 1-3 and 6-8 show two possible embodiments of the towel heater 10 in which the second convector section 12 is with natural circulation; the two embodiments differ from each other solely for the number and shape of the heating bodies 16 forming a support for the towels.

Figures 4-5 and 9-10 show a possible alternative of the two embodiments of the towel heater 10 according to figures 1-3 and 6-8 in which the second convector section 12 is of the type with forced circulation with electric fans 20.

In the embodiments of the towel heater 10 shown in the attached figures, the first radiator section 11 is arranged above the second convector section 12. This arrangement, however, is not restrictive.

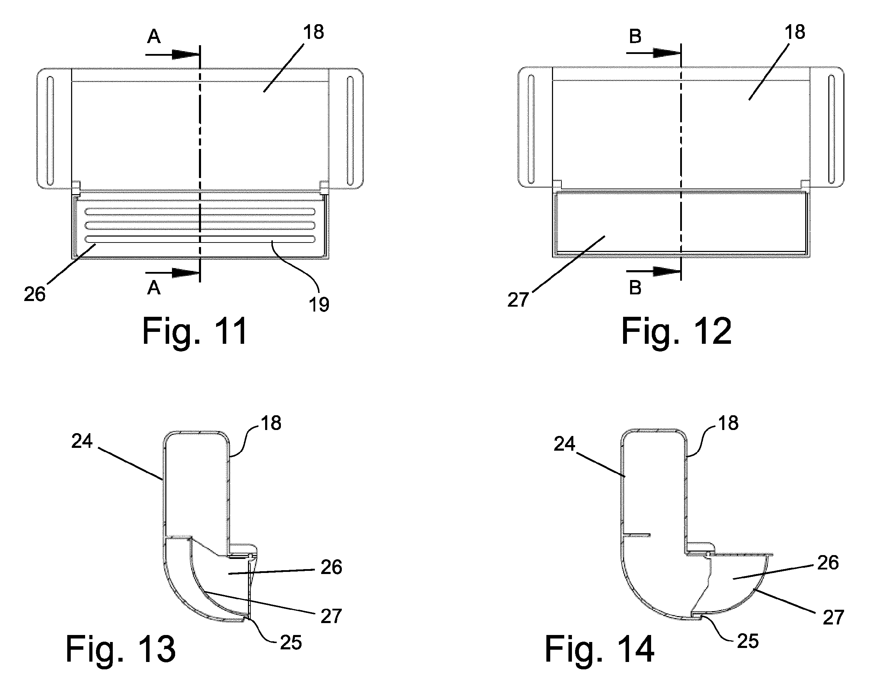

Figures 11 to 14 show a detail of a further possible embodiment of the towel heater 10 in which the second convector section 12 is equipped with a casing 18 provided with inlet openings 24 of the air to be heated and with an outlet opening 25 with which an orientable diffusor 26 is coupled.

The diffusor 26 has a curved surface 27 adapted for deviating the hot air flow produced by the second convector section 12. The diffusor 27 is mounted rotatably around a rotation axis arranged at an upper edge of the outlet opening 25 for the hot air. The diffusor 26 can thus be rotated between a first operative position (figures 11 and 13), in which the hot air flow is deviated in a substantially horizontal direction, and a second operative position (figures 12 and 14), in which the hot air flow is deviated in a substantially vertical direction upwards.

The angle of orientation of the diffusor 26 is comprised between 0 and 90 degrees, but it is also possible to provide for a wider angle range. Of course, the diffusor 26 can also take up any intermediate angular orientation between 0 and 90 degrees. When the diffusor 26 is oriented in the configuration illustrated in figures 11 and 13, the jet of hot air produced by the second convector section 12 is directed horizontally, whereas in the configuration illustrated in figures 12 and 14, the air jet is directed vertically upwards, so as to lick the towels hung at the heating bodies 16 of the first radiator section 11 advantageously arranged above the second convector section 12.

The diffusor 26 is equipped with a screen equipped with slit openings 19 for the outlet of hot air. Of course, it is not generally essential for the diffusor 26 to be equipped with slit openings for the outlet of hot air, such openings can have different shape suitable for the function, for example with circular holes or grated, provided that the diffusor is orientable, so as to be able to direct the air flow coming out towards the linen hung on the heating bodies 16 or towards another desired direction.

The operation of the towel heater 10 is advantageously regulated and controlled by the user through the control device 23 of the programmable type to which the control valve means 13, the electric resistance elements, the electric fans 20 and the diffusor 26 if present are slaved. Advantageously, the device 23 can include a thermostat, a presence sensor and a timer to automatically control the operation of the towel heater 10 regulating the circulation of the thermovector liquid in the first radiator section 11 and in the second convector section 12, the electrical power supply of the possible electric resistance elements, the activation and the speed of the electric fans 20 and the orientation of the diffusor 26.

The casing 18 can be made of suitable metallic or plastic material. Advantageously, the heating bodies 16 and the battery of finned tubes 17 can be made of aluminium or steel.

The towel heater of the hydraulic or electro-hydraulic type with differentiated heating areas according to the present invention allows the room temperature of a bathroom to be advantageously and quickly heated with low electrical energy consume. The towel heater according to the present invention, indeed, exploits the thermovector liquid usually circulating in a radiator to supply, in particular and advantageously simultaneously in parallel or selectively, a convector used to quickly heat the ambient air in particular when the radiator is switched off or being switched on. The radiator and the convector are inserted in the same hydraulic circuit and even if electric resistance elements are present, whether or not they are arranged to be immersed in the thermovector liquid, they are of lower power (for example equal to about 300W) than that of the electric resistance elements with which electric convectors are usually equipped.

The towel heater according to the present invention allows to quickly and conveniently dry or heat towels or similar hung on it, in particular being able to direct the hot air flow emitted by the convector advantageously upwards and towards the radiator on which the towels are hung.

The towel heater of the hydraulic or electro-hydraulic type with differentiated heating areas thus conceived can undergo numerous modifications and variants, all of which are covered by the invention; moreover, all of the details can be replaced by technically equivalent elements. In practice, the materials used, as well as the sizes, can be whatever according to the technical requirements.

## Claims

1. Towel heater (10) of the hydraulic or electro-hydraulic type with differentiated heating areas, **characterised in that** it comprises a hydraulic circuit for circulation of a thermovector liquid, said circuit comprising at least one first radiator section (11) and at least one second convector section (12) in which said thermovector liquid circulates, wherein said hydraulic circuit comprises:
- an inlet manifold (21), which is provided with an inlet (14) associable with a supply source of the hot thermovector liquid, and an outlet manifold (22), which is provided with an outlet (15) associable with a discharge of the cold thermovector liquid, wherein said inlet manifold (21) and said outlet manifold (22) consist of a respective column element,
- a plurality of heating bodies (16) forming said first radiator section (11) and that extend horizontally between said inlet manifold (21) and said outlet manifold (22), wherein said heating bodies (16) are passed through by said thermovector fluid and act as elements on which to hang towels,
- a battery of finned tubes (17) forming said second convector section (12), said finned tubes (17) extending between said inlet manifold (21) and said outlet manifold (22) and said battery of finned tubes (17) being in communication in inlet with said inlet manifold (21) and in outlet with said outlet manifold (22).

2. Towel heater (10) according to claim 1, **characterised in that** it comprises regulating means associated with said hydraulic circuit for regulating the flow of the thermovector liquid that passes through said first radiator section (11) and said second convector section (12).

3. Towel heater (10) according to claim 2, **characterised in that** said regulating means are control valve means (13).

4. Towel heater (10) according to claim 2 or 3, **characterised in that** said regulating means are suitable for selectively and alternatively excluding said first radiator section (11) or said second convector section (12) from the circulation of said thermovector liquid.

5. Towel heater (10) according to one or more of the previous claims, **characterised in that** said second convector section (12) is arranged on a vertical plane below said first radiator section (11).

6. Towel heater (10) according to one or more of the previous claims, **characterised in that** said finned tubes of said battery of finned tubes (17) have a smaller cross section than that of said heating bodies (16).

7. Towel heater (10) according to one or more of the previous claims, **characterised in that** said second convector section (12) is of the type with natural circulation or with forced circulation by means of one or more electric fans (20).

8. Towel heater (10) according to one or more of the previous claims, **characterised in that** it comprises electric resistance elements associated with or arranged along said hydraulic circuit.

9. Towel heater (10) according to claim 8, **characterised in that** said electric resistance elements are arranged at the portion of said hydraulic circuit that defines said second convector section (12).

10. Towel heater (10) according to claims 7 and 9, **characterised in that** said second convector section (12) is of the type with forced circulation by means of one or more electric fans (20) and comprises electric resistance elements outside of said hydraulic circuit and arranged close to or at said electric fans (20) or in front of said battery of finned tubes (17).

11. Towel heater (10) according to one or more of the previous claims, **characterised in that** said second convector section (12) comprises a casing (18) provided with one or more inlet openings for the air to be heated and with at least one outlet opening for the heated air, wherein said at least one outlet opening (25) for hot air is coupled with an orientable diffusor (26) that has a deviation surface (27) of the air flow that has a curved shape and that is mounted in a rotatable manner about a rotation axis arranged at an upper edge of said outlet opening (25) for the hot air, between a first operative position, in which the hot air flow is deviated by said diffusor (26) in a substantially horizontal direction, and a second operative position, in which the hot air flow is deviated by said diffusor (26) in a substantially vertical direction upwards.

12. Towel heater (10) according to one or more of the previous claims, **characterised in that** it comprises a control device (23) of the programmable type to which said regulating means are slaved.
